# EUROPÄISCHE PATENTANMELDUNG

(11) **EP 2 433 490 A2**
(43) Veröffentlichungstag der Anmeldung: **28.03.2012**
(21) Anmeldenummer: 11168030.2
(22) Anmeldetag: 30.05.2011
(51) Int. Cl.: A01K 5/00, A23N 17/00

(54) **Selbstfahrender Futtermischer**

(30) Priorität: 22.09.2010 DE 202010013493 U
(71) Anmelder: Trioliet Holding B.V., 7575 BE Oldenzaal (NL)
(72) Erfinder: Liet, Cornelis Hendricus, 7581 PJ Losser (NL)
(74) Vertreter: Grünecker, Kinkeldey, Stockmair & Schwanhäusser

(57) **Zusammenfassung**

Es wird ein selbstfahrender Futtermischer (1) mit einem Fahrbereichsrahmen (4) und einem Mischbereichsrahmen (9) beschrieben, die miteinander gekoppelt sind, wobei der Fahrbereichsrahmen (4) wenigstens eine Laufradachse (25) trägt. Um einen derartigen Futtermischer (1) konstruktiv einfacher zu gestalten wird vorgeschlagen, die angetriebene Laufradachse (25) als pendelnde Lenkachse auszubilden.

## Beschreibung

Die Erfindung bezieht sich auf einen selbstfahrenden Futtermischer der im Oberbegriff im Anspruch 1 erläuterten Art.

Ein derartiger Futtermischer ist aus der NL 1000023 bekannt. Der bekannte Futtermischer enthält ein Antriebsteil, das mit dem Motor, einer rundum verglasten Fahrerkabine, mit Fahrersitz und dergleichen ausgestattet ist und mit einem Mischteil zu einer Einheit verbunden ist, die gemeinsam verfahrbar sind und wobei die Funktionen des Mischteils vom Fahrteil steuerbar sind. Die Verbindung zwischen dem Fahrteil und dem Mischteil erfolgt über ein Verbindungselement das derart ausgebildet ist, dass Fahrteil und Mischteil relativ zueinander um eine vertikale und eine horizontale Achse verschwenkbar sind. Durch das Verbindungselement erstreckt sich die Antriebswelle für die Mischwerkzeuge, die aufgrund der Bewegungsmöglichkeiten zwischen dem Fahrteil und dem Mischteil mit einem doppelten Universalgelenk versehen werden müssen. Es ist weiterhin eine Wiegeeinrichtung zum Messen des Gewichts des Mischteils vorgesehen.

Der bekannte selbstfahrende Futtermischer ist somit relativ kompliziert in der Konstruktion. Insbesondere erfordert die bekannte Konstruktion aufwendige Gelenke sowohl in der Verbindung zwischen den Rahmen von Fahrteil und Mischteil als auch für die Antriebswelle. Trotzdem ist der Knickwinkel, der über das Verbindungselement möglich ist, relativ beschränkt. Außerdem erfordern die Gelenke eine Wartung. In leerem Zustand ist das Mischteil wesentlich leichter als das Fahrteil, was wegen der vorhandenen Gelenke zu einer stark verminderten Stabilität führt.

Der Erfindung liegt die Aufgabe zugrunde, einen selbstfahrenden Futtermischer mit einer verbesserten Verbindung zwischen Fahrteil und Mischteil auszustatten.

Die Aufgabe wird durch die im Anspruch 1 angegebenen Merkmale gelöst.

Erfindungsgemäß wird die angetriebene und lenkbare Laufradachse pendelnd gelagert. Dadurch wird die die Konstruktion sowohl im Hinblick auf den erforderlichen Aufwand für die Herstellung als auch im Hinblick auf den erforderlichen Aufwand für die Wartung vereinfacht.

Vorteilhafte Weiterbildungen der Erfindung sind den Unteransprüchen zu entnehmen. Eine besonders einfache und wirksame Pendelkonstruktion wird durch den Einsatz einer Pendelachse möglich.

Durch die pendelnde Aufhängung der Lenkachse ist es nunmehr möglich, den Rahmen des Fahrteils mit dem Rahmen des Mischteils im Wesentlichen starr zu verbinden, so dass aufwändige Gelenke oder dgl. nicht mehr nötig sind.

Von besonderem Vorteil ist die Integration einer Wiegeeinrichtung in die Verbindungseinrichtung zwischen den beiden Rahmen, wobei die Verbindungseinrichtung so ausgebildet ist, dass die beiden Rahmen in Richtung der Schwerkraft relativ zueinander bewegbar sind. Dies stört die Lenkung nicht und hält die beiden Rahmen in der Spur, erlaubt jedoch trotzdem eine besonders einfache und konstruktive vorteilhafte Ausbildung der Wiegeeinrichtung.

Eine Wiegeeinrichtung kann, zusätzlich oder alternativ, an der Pendelachse vorgesehen sein.

Konstruktiv besonders bevorzugt enthält die Verbindungseinrichtung ein Laschenelement, das über eine im Wesentlichen horizontale Schwenkachse mit den Rahmen verbunden ist.

Zweckmäßigerweise ist ein Wiegestab als Teil der Verbindungseinrichtung ausgebildet, so dass er gleichzeitig zur Stabilisierung der Verbindung zwischen beiden Rahmen beiträgt. Der Wiegestab ist bevorzugt in üblicher Weise fest mit einem der Rahmen und über eine Messeinrichtung mit dem anderen Rahmen verbunden.

Bevorzugt erfolgt die Verbindung über ein Trägerpaar, die im Abstand zueinander durch zwei Elemente, bevorzugt ein Laschenelement und ein Wiegestab, miteinander verbunden sind.

Der erfindungsgemäße Futtermischer kann mit weiteren Merkmalen ausgestattet sein, die seine Funktion weiter verbessern und/oder die Bedienung erleichtern. Diese kann beispielsweise eine Selbstladeeinrichtung für den Mischbehälter sein, die zwar für Mischbehälter, die als Anhänger an Schlepper oder Traktoren ausgebildet sind, bereits bekannt ist (siehe beispielsweise EP 706 755), für selbstfahrende Futtermischer jedoch noch nicht in Betracht gezogen wurden Dies kann beispielsweise auch ein zumindest in seinem Bodenbereich absenkbarer Mischbehälter oder ein bezüglich der Sichtrichtung umstellbarer Fahrersitz sein.

Von besonderem Vorteil für eine bequeme Bedienung und nicht auf einen Futtermischer mit pendelnd aufgehängter, angetriebener Lenkachse beschränkt, ist eine im Mischbehälter vorgesehene, zur Fahrerkabine weisenden Verglasung und Reinigungseinrichtungen für diese Verglasung, die bevorzugt für eine Reinigung von innen und außen ausgebildet ist..

Ein Ausführungsbeispiel der Erfindung wird nachfolgend anhand der Zeichnungen näher erläutert. Es zeigen:
- Figur 1: eine schematisierte Seitenansicht eines erfindungsgemäßen selbstfahrenden Futtermischers,
- Figur 2a: eine perspektivische Darstellung einer herausvergrößerten Einzelheit aus Figur 1,
- Figur 2b: die Darstellung nach Fig. 2a mit einer abgewandelten Wiegeeinrichtung,
- Figur 3: die Einzelheit aus Figur 2a in Seitenansicht, und
- Figur 4: der Futtermischer nach Figur 1 in Beladestellung.

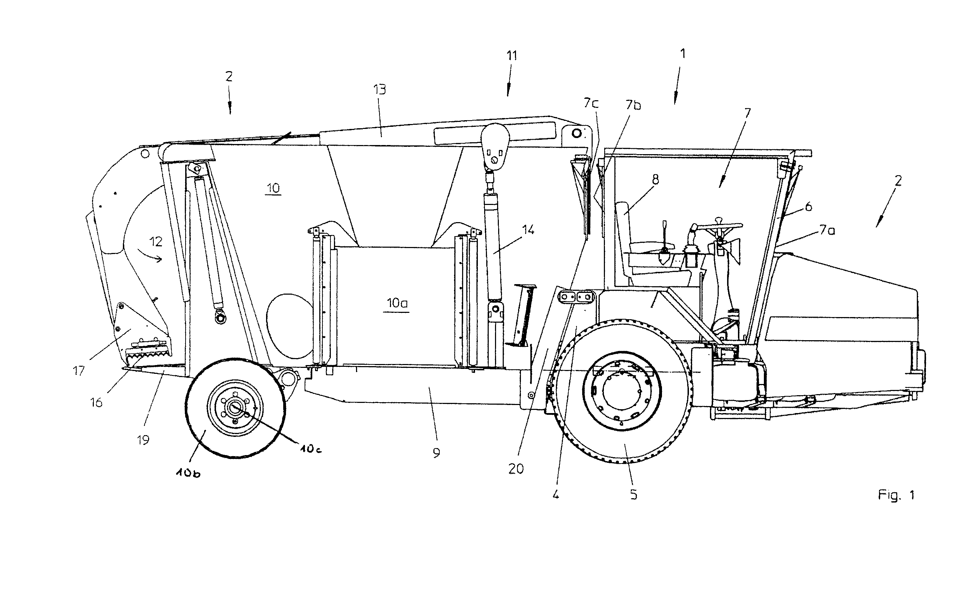

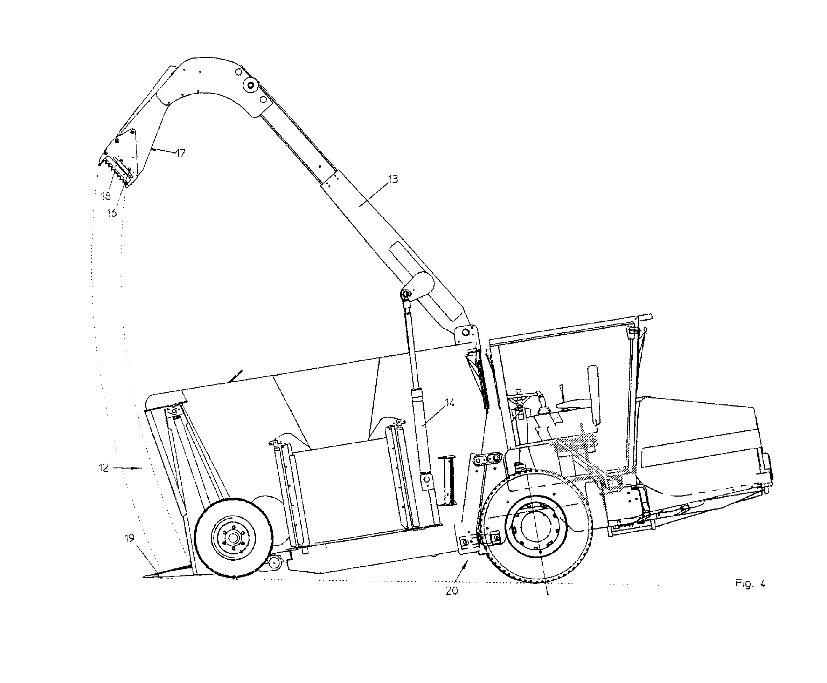

Figur 1 zeigt in stark schematisierter Darstellung einen selbstfahrenden Futtermischer 1, der aus einem Fahrbereich in Form eines Fahrteils 2 und einem Mischbereich in Form eines Mischteils 3 besteht. Der Fahrteil 2 enthält einen Rahmen 4, Laufräder 5, einen nicht gezeichneten Antrieb mit Motor, Getriebe, Steuerung, Lenkung und dergleichen, eine Fahrerkabine 6 mit einer Verglasung 7, die sowohl in Vorwärtsfahrtrichtung eine Sichtscheibe 7a als auch in Rückwärtsfahrtrichtung eine nach rückwärts weisende Sichtscheibe 7b aufweist, so dass der Fahrer beim Fahren in beiden Richtungen den Überblick hat (siehe auch Figur 4). Die Sichtscheiben 7a, 7b können mit Reinigungsvorrichtungen, beispielsweise Scheibenwischanlagen oder dergleichen ausgerüstet sein.

Im Inneren der Fahrkabine 6 ist weiterhin ein Fahrersitz 8 angeordnet, der um eine im Wesentlichen senkrechte Achse so verschwenkbar ist, dass der Fahrer wahlweise einen Blick durch die Sichtscheibe 7a oder einen Blick durch die Sichtscheibe 7b hat.

Der Mischteil 3 weist ebenfalls einen Rahmen 9 auf, auf dem ein Mischbehälter 10 angeordnet ist, in dessen Innerem die üblichen, hier nicht gezeichneten Mischorgane angeordnet sind. Der Mischbehälter 10 ist an einer nach vorn weisenden, von der Fahrerkabine 6 (durch eine ev. vorhandene rückwärtige Verglasung 7b) aus einsehbaren Stelle mit einer Verglasung 7c versehen, die mit einer Reinigungseinrichtung, bevorzugt für die Außen- und die Innenseite, versehen ist.

Der Mischbehälter 10 enthält die übliche seitliche Klappe 10a, aus der Futter seitlich während des Verfahrens des Futtermischers 1 in der Stallgasse dosiert ausgegeben werden kann, und Laufräder 10b, die auf einer starren Achse (Achsstummel 10c) mit zwei Gelenken und Torsionsverbindung sitzen. Im Bereich der Laufräder 10b kann weiterhin eine nicht gezeigte Wiegeeinrichtung vorgesehen sein, wobei bevorzugt die Achsstummel 10c der Laufräder 10b als Wiegestäbe mit daran angebrachten Messstreifen ausgebildet sind.

Der Mischteil 3 enthält weiterhin eine Selbstladeeinrichtung 11 und eine hintere Ladeöffnung 12. Die Selbstladeeinrichtung 11 enthält einen Schwenkarm 13, der von einer Kolben-Zylindereinheit 14 bewegt wird. Die Selbstladeeinrichtung 11 ist in Figur 4 mit geöffneter Ladeöffnung 12 dargestellt und ist von derjenigen Art, wie sie beispielsweise in der EP 706 755 beschrieben ist. Durch Betätigen der Kolben-Zylindereinheit 14 wird der Arm 13, bevorzugt sind zwei symmetrisch beidseitig des Mischbehälters 10 vorgesehene Arme 13 vorgesehen, angehoben und gibt die Ladeöffnung 12 frei, die bei abgesenkter Selbstladeeinrichtung 11 durch diese verschlossen ist.

Das untere Ende des Arms 13 ist mit einer Schneideinrichtung 16 versehen, die an Trägern 17 angeordnete Sägezähne 18 oder eine bzw. zwei hydraulisch angetriebene Schneidmesser oder eine andere bekannte Trennvorrichtung aufweist, durch die mit Hilfe einer gesteuerten Bewegung des Arms 13 Futter, beispielsweise Silage, schicht- oder blockweise abgeschnitten und in den Mischbehälter 10 geschoben werden kann. Um dies zu erleichtern, enthält der untere Teil des Mischbehälters unterhalb der Ladeöffnung eine Rampe 19, die unter den Futterstock geschoben wird, um einen Gegendruck zu leisten.

Wie ein Vergleich der Figuren 1 und 4 deutlich macht, ist der hintere Teil des Futtermischers 1, zumindest jedoch der Mischbehälter 10 im Bereich seines Bodens, zum Beladen absenkbar, was bevorzugt durch eine Schrägstellung der gesamten Längsachse des Futtermischers 1 geschieht.

Das Fahrteil 2 und das Mischteil 3 sind permanent miteinander gekoppelt und, im Gegensatz zu den herkömmlichen Futtermischwagen, für eine dauernde gemeinsame Benutzung ausgelegt; eine Trennbarkeit für Wartungszwecke oder dergleichen ist jedoch nicht ausgeschlossen.

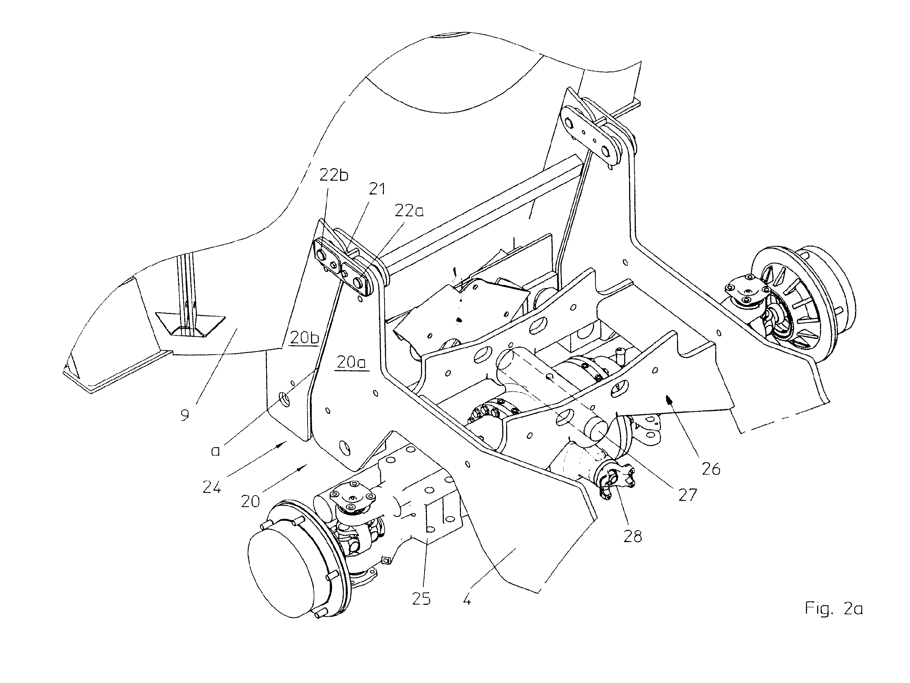

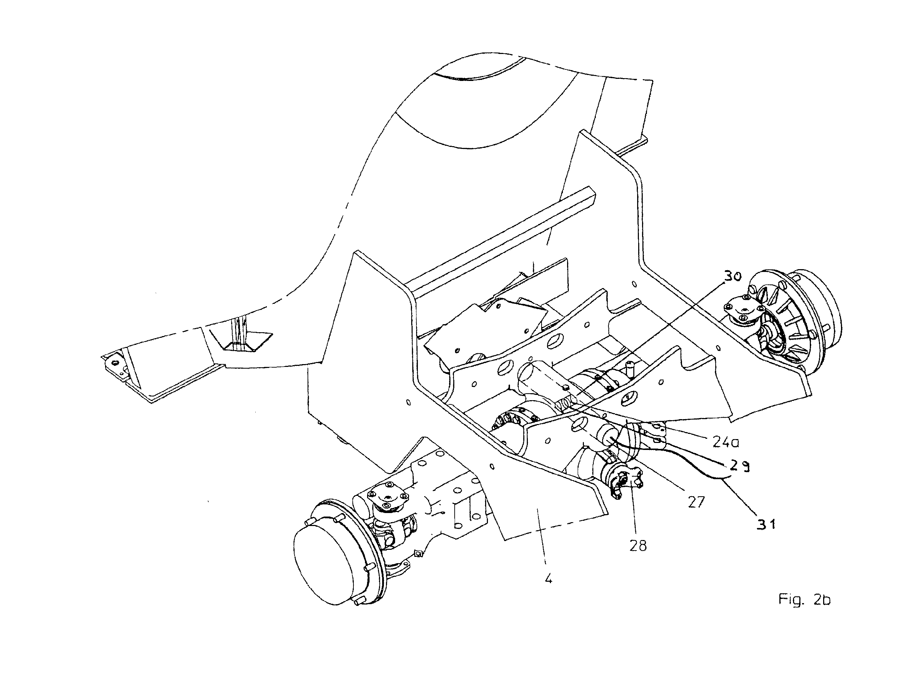

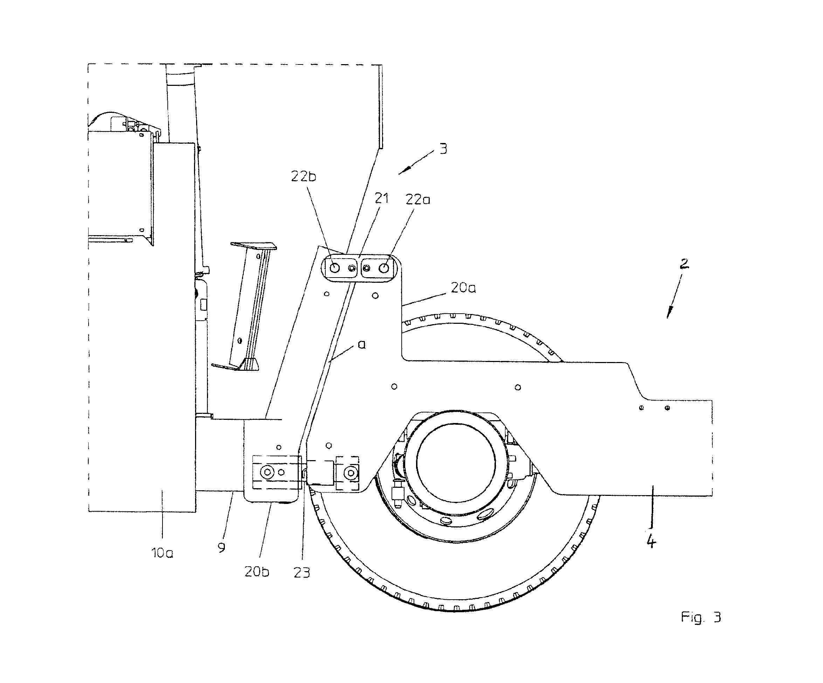

Wie die Figuren 2a, 2b und 3 zeigen, sind der Fahrteil 2 und der Mischteil 3 über eine Verbindungseinrichtung 20 miteinander verbunden. Die Verbindungseinrichtung 20 verbindet den Rahmen 4 des Fahrteils 2 mit dem Rahmen 9 des Mischteils 3. Die Verbindungseinrichtung 20 ist so ausgelegt, dass sie die Rahmen 4 und 9 starr miteinander verbindet. "Starr" bedeutet in diesem Zusammenhang, dass sich die beiden Rahmen 4 und 9 nicht um eine vertikale Achse relativ zueinander verschwenken können.

Die Verbindungseinrichtung 20 enthält bevorzugt zwei im Abstand quer zur Längsachse des Futtermischers 1 angeordnete Trägerpaare mit jeweils einem Träger 20a und 20b, wobei der Träger 20a am Fahrbereichsrahmen 4 und der Träger 20b am Mischbereichsrahmen 9 befestigt, das heißt verschraubt oder verschweißt oder dergleichen ist. Die beiden Träger 20a, 20b jedes Trägerpaares sind über ein Laschenelement 21 miteinander verbunden, das mit jedem der Träger über eine im Wesentlichen horizontale Schwenkachse 22a bzw. 22b schwenkbar verbunden ist, so dass sich die beiden Träger 20a, 20b in vertikaler Richtung, durch einen Abstand a zwischen den Trägern 20a, 20b begrenzt, geringfügig relativ zueinander bewegen können.

In einem vertikalen Abstand zum Laschenelement 21 erstreckt sich ein Wiegestab 23 einer Wiegeeinrichtung 24 (Figur 3) über den Abstand a zwischen den Trägern 20a und 20b. Der Wiegestab 23 ist mit einem der Rahmen, bevorzugt den Mischbereichsrahmen 9, fest verbunden und wirkt am anderen Rahmen, bevorzugt dem Fahrbereichsrahmen 4, auf eine Druck- oder Wegmesseinrichtung ein. Wenn sich somit der Mischteil 3 unter dem Gewicht des eingefüllten Futters relativ zum Fahrteil 2 in Vertikalrichtung bewegt, so dass drückt der Wiegestab 23 auf die Druckmesseinrichtung der Wiegeeinrichtung 24 und liefert ein für das Gewicht bzw. die Gewichtsänderung proportionales Signal.

Der Wiegestab 23 ist, wie die Figuren 2 und 3 zeigen, in vertikalem Abstand zum Laschenelement 2 am unteren Bereich der Träger 20a, 20b angeordnet und ist Teil der Verbindungseinrichtung 20, die dadurch eine Parallelogrammanordnung aufweist.

Diese starre Verbindung zwischen den beiden Teilen 2 und 3 wird gestattet durch eine Ausbildung der vom Fahrantriebs-Motor des Futtermischers 1 angetriebenen Laufradachse 25 der Laufräder 5 als pendelnde Lenkachse, die in üblicher Weise, bei 26 in Figur 2 angedeutet, drehbar am Rahmen 4 aufgehängt ist. Die Aufhängung erfolgt bevorzugt über eine Pendelachse 27, die sich in Längsrichtung des Futtermischers 1 erstreckt und um die die Lenkachse 25 pendeln kann. Die Antriebskraft auf die Räder 5 wird über eine Antriebsachse 28 und ein nicht gezeichnetes Getriebe übertragen.

Der angetriebenen Lenkachse 25 kann eine Wiegeeinrichtung 24a zugeordnet sein, die bevorzugt die Pendelachse 25 als Wiegestab benutzt, aber auch an anderen Stellen der Lenkachse 25 vorgesehen sein kann. Diese Wiegeeinrichtung 24a kann zusätzlich oder alternativ zur Wiegeeinrichtung 24 vorgesehen sein. Wie Fig.2b näher zeigt, ist die Messeinrichtung 29 (Messstreifen) in das Innere der Pendelachse 25 (über eine Bohrung 30) verlegt und über ein Kabel 31 mit einer Steuereinrichtung, z. B. einem Computer verbunden.

Dadurch ist auf jeden Fall eine Zweipunktmessung des Ladegewichts möglich; wenigstens einmal im vorderen und einmal im hinteren Bereich des Mischbehälters, wobei vorn zur Erhöhung der Genauigkeit zwei Messpunkte, am Trägerpaar und an der Lenkachse, vorhanden sind.

In Abwandlung des beschriebenen und gezeichneten Ausführungsbeispiels kann die erfindungsgemäße Verbindungseinrichtung auch bei Futtermischern ohne Selbstladeeinrichtung und die Selbstladeeinrichtung auch bei selbstfahrenden Futtermischern ohne pendelnde Lenkachse eingesetzt werden. Auch der Einsatz eines umstellbaren Fahrersitzes und/oder die Sichtscheibe am Mischbehälter sind bei anderen Futtermischern, z.B. Futtermischern ohne pendelnder Lenkachse denkbar. Wiegeeinrichtungen können auch an anderen Stellen vorgesehen sein, z.B. in die Laufradachse integriert werden. Statt einer an Pendelachse kann die Lenkachse auch an einer Federkonstruktion angeordnet werden, z. B. an zwei Blattfedersätzen (links und rechts), was den zusätzlichen Vorteil hätte, dass gleichzeitig die Bodenanpassung der Räder verbessert wird.

## Patentansprüche

1. Selbstfahrender Futtermischer (1) mit einem Fahrbereichsrahmen (4) und einem Mischbereichsrahmen (9), die miteinander gekoppelt sind, wobei der Fahrbereichsrahmen (4) wenigstens eine Laufradachse (25) trägt, **dadurch gekennzeichnet, dass** die Laufradachse angetrieben und als pendelnde Lenkachse (25) ausgebildet ist.

2. Futtermischer nach Anspruch 1, **dadurch gekennzeichnet, dass** die Lenkachse (25) an einer Pendelachse (27) angeordnet ist.

3. Futtermischer nach Anspruch 1 oder 2, **dadurch gekennzeichnet, dass** Fahrbereichs-und Mischbereichsrahmen (4, 9) über eine Verbindungseinrichtung (20) im Wesentlichen starr miteinander verbunden sind.

4. Futtermischer nach Anspruch 3, **dadurch gekennzeichnet, dass** die Verbindungseinrichtung (20) eine Relativbewegung der beiden Rahmen (4, 9) in Richtung der Schwerkraft gestattet, die durch eine Wiegeeinrichtung (24) feststellbar ist.

5. Futtermischer nach Anspruch 4, **dadurch gekennzeichnet, dass** die Wiegeeinrichtung (24) der Verbindungseinrichtung (20) zugeordnet ist.

6. Futtermischer nach einem der Ansprüche 1 bis 5, **dadurch gekennzeichnet, dass** der Lenkachse (25) eine Wiegeeinrichtung (24a) zugeordnet ist.

7. Futtermischer nach einem der Ansprüche 3 bis 6, **dadurch gekennzeichnet, dass** die Verbindungseinrichtung (20) ein Laschenelement (21) aufweist, das über eine im Wesentlichen horizontale Schwenkachse (21 a, 21 b) mit den Rahmen (4, 9) verbunden ist.

8. Futtermischer nach einem der Ansprüche 3 bis 7, **dadurch gekennzeichnet, dass** die Verbindungseinrichtung (20) wenigstens einen Wiegestab (23) enthält.

9. Futtermischer nach Anspruch 8, **dadurch gekennzeichnet, dass** der Wiegestab (23) fest mit einem der Rahmen (4, 9) verbunden und am anderen Rahmen (9, 4) über eine Messeinrichtung befestigt ist.

10. Futtermischer nach einem der Ansprüche 3 bis 9, **dadurch gekennzeichnet, dass** die Verbindungseinrichtung (20) wenigstens ein Trägerpaar (20a, 20b) mit jeweils einem am Farbereichs- und am Mischbereichsrahmen (4, 9) befestigten Träger enthält, die über ein schwenkbar an den Trägern (20a, 20b) gelagertes Laschenelement (21) und über einen Wiegestab (23) miteinander verbunden sind, wobei das Laschenelement (21) und der Wiegestab (23) einen vertikalen Abstand zueinander aufweisen.

11. Futtermischer nach einem der Ansprüche 1 bis 10, **dadurch gekennzeichnet, dass** der Mischbereichsrahmen (9) einen Mischbehälter (10) und eine Selbstladeeinrichtung (12) für den Mischbehälter (10) trägt.

12. Futtermischer nach Anspruch 11, **dadurch gekennzeichnet, dass** die Selbstladeeinrichtung (12) eine einer Ladeöffnung (12) des Mischbehälters (10) zugeordnete Beladeeinrichtung (13, 15) aufweist.

13. Futtermischer nach einem der Ansprüche 1 bis 12, **dadurch gekennzeichnet, dass** der Mischbereichsrahmen (9) einen Mischbehälter (10) enthält und eine Einrichtung zum Absenken des Mischbehälters (10) zumindest im Bereich seines Bodens vorgesehen ist.

14. Futtermischer nach einem der Ansprüche 1 bis 13, dass der Fahrbereichsrahmen (4) einen bezüglich der Sichtrichtung umstellbaren Fahrersitz (8) aufweist.

15. Futtermischer nach einem der Ansprüche 1 bis 14, **dadurch gekennzeichnet, dass** der Fahrbereichsrahmen (4) eine Fahrerkabine (6) und der Mischbereichsrahmen (9) einen Mischbehälter (10) mit einer von der Fahrerkabine (6) her einsehbaren Verglasung (7c) aufweist.

16. Futtermischer nach Anspruch 14, **dadurch gekennzeichnet, dass** die Verglasung (7c) mit einer Reinigungseinrichtung ausgestattet ist, die bevorzugt beide Seiten der Verglasung (7c) reinigt.
